# EUROPEAN PATENT SPECIFICATION

(11) **EP 3 650 138 B1**
(45) Date of publication and mention of the grant of the patent: **20.10.2021**
(21) Application number: 18461624.1
(22) Date of filing: 06.11.2018
(51) Int. Cl.: B22F 5/10, B22F 7/06, C22C 21/08, C23C 24/04, B22F 10/60, B22F 3/15, B22F 3/24, C22C 1/04

(54) **COLD SPRAY FORMING**
KALTSPRÜHKOMPAKTIERUNG
FORMATION PAR PULVÉRISATION À FROID

(43) Date of publication of application: 13.05.2020
(73) Proprietor: Hamilton Sundstrand Corporation, Charlotte, NC 28217-4578 (US)
(72) Inventor: Mironets, Sergey, 51-188 Szymanow (PL); Minta, Zbigniew, 53-434 Wroclaw (PL)
(74) Representative: Dehns

(56) References cited:
- EP-A1- 3 345 699
- EP-A2- 2 910 324
- JP-A- 2016 113 642
- GAVRAS ANASTASIOS G ET AL: "Effects of processing on microstructure evolution and fatigue crack growth mechanisms in cold-spray 6061 aluminum alloy", INTERNATIONAL JOURNAL OF FATIGUE, ELSEVIER, AMSTERDAM, NL, vol. 110, 8 January 2018 (2018-01-08), pages 49-62, XP085352348, ISSN: 0142-1123, DOI: 10.1016/J.IJFATIGUE.2018.01.006

## Description

### Field

The present disclosure relates to a method of manufacturing a component, as well as a component produced by the method. The component may be, for example, a duct for aerospace applications.

### Background

Challenges in manufacturing ducting systems can stem from the complex configuration of ducting, resulting in a large number of interfaces.

Currently, wrought or cast 6061 aluminium welded hog out with welded flanges is the main manufacturing technique for producing complex ducting systems. There can be many limitations associated with this approach. First, Al 6061 cannot be welded autogenously, i.e., using a filler material which is the same as the main body. The use of filler material (Al 4043, Al 4047, etc.) is needed to eliminate solidification cracking. The resulting welded joint may then have inferior tensile, corrosion and fatigue properties compared to the main body as a result of the filler material.

Also, producing defect free, multi-bend tubing can be challenging. Direct Energy Deposition (DED) Additive Manufacturing techniques are used for complex ducting manufacturing. The material selection for such techniques, however, is limited to "weldable" alloys only. The use of DED for Al-based powders is challenging because of their high reflectivity, which requires higher energy density. Also Al alloys are prone to oxidation and full argon containment of the processing chamber is required. On top of this there is low powder utilization to significantly reduce the effectiveness of DED for producing free standing components made of reactive materials.

EP 2910324 A2 and EP 3345699 A1 each disclose a method of forming a component in accordance with the preamble of claim 1.

JP 2016 113642 A discloses a component in accordance with the preamble of claim 12.

### Summary

According to a first aspect, the present disclosure can be seen to provide a method of manufacturing a component. The method comprises building a preform from a powdered first material. The preform has residual porosity. A coating of a second material is then applied to a porous surface of the preform by a cold spray powder deposition process to form a coated preform having a gas-tight surface. The coated preform is consolidated to produce a component. The method is characterised in that the applying of the coating comprises building one or more flanges of the second material by cold spray powder deposition, each flange encircling an end of a tubular section of the component.

In addition to the features described above, the preform may be used as a mandrel in the cold spray powder deposition process. For example, it may be rotated with respect to a nozzle of a cold spray powder deposition apparatus, or the nozzle may be moved with respect to the preform.

In addition to the features described above, the preform may be built with a density in a range of 50 to 90% of a theoretical density the first material. Optionally the preform may be built with a density in the range of 60-80% of a theoretical density of the first material.

In addition to the features described above, the preform may be built using an additive manufacturing and/or powder metallurgy process.

In addition to the features described above, the preform may be built using a gravity sintering technique. Optionally the preform may be built by sintering in an inert atmosphere.

In addition to the features described above, the preform may be built by sintering the powdered first material in a reusable mould. Optionally the first material may be an aluminium alloy. It may be an Al 6061 alloy, for example.

In addition to the features described above, the preform may be sintered at between 550-650°C (1022-1202°F). Optionally the preform may be sintered for between 30 minutes to 6 hours. The sintering may be performed in high purity nitrogen.

In addition to the features described above, the second material may be a different composition to the first material. Optionally the second material may include additions of elements to promote welding of the component to another component.

In addition to the features described above, the component may comprise a tubular section. The coating of the second material may be applied to an inner and/or an outer surface of the preform. Optionally the coating of the second material may be applied by a robotic arm.

In addition to the features described above, the coated preform may be consolidated by a Hot Isostatic Pressing (HIP) process.

In addition to the features described above, the method may be a method of making a duct or duct system for an aerospace application. Optionally the component may comprise a centrepiece and a plurality of duct sections.

According to a second aspect, the present disclosure can be seen to provide a component which has been made by a method as described above.

According to a third aspect, the present disclosure can be seen to provide a component comprising a core of a sintered first material powder having a density of greater than 98% of theoretical density and one or more coatings of a second material that comprises a cold spray powdered deposition layer or layers applied to an inner surface and/or outer surface of the component. The component is characterised in that the one or more coatings comprise flanges (25), each flange encircling an end (12a, 12b, 14a, 14b, 16a, 16b 18a, 18b) of a tubular section of the component

In addition to the features described above, the first material may be an aluminium alloy. Optionally the first material may be Al 6061. The second material may be a weldable or non-weldable material.

In addition to the features described above, the component may be a tubular component, a multi-tubular component, a duct, a duct system, a centrepiece or other component for a duct or ducting system. Optionally the component is for an aerospace application, in particular a duct system for an aircraft.

### Brief Description of the Figures

Certain embodiments of the present disclosure will now be described in greater detail and by way of example only, with reference to the accompanying drawings:
Fig. 1 illustrates a perspective view of an exemplary preform which has been made by gravity sintering;
Fig. 2 illustrates a perspective view of the preform of Fig. 1 which has been cold sprayed to form a component in the form of a duct;
Fig. 3 is a representation of powder filling a mould for a gravity sintering process. In the example the powder is for the production of high porosity bronze filters;
Fig. 4 is an illustration of moulds filled with powder going through a controlled temperature sintering operation;
Fig. 5 is a schematic representation of a conventional compaction method;
Fig. 6 is a schematic representation of a laser bed fabrication apparatus;
Fig. 7 is a schematic representation of a cold spray powder deposition apparatus;
Fig. 8 is a schematic representation of a Hot Isostatic Pressing (HIP) apparatus;
Figs. 9 a-d are schematic illustrations of the structure of a component going through the stages of building the preform, coating the preform and consolidating the preform; and
Fig. 10 is a flow chart of the process illustrated in Fig. 9.

### Detailed Description

Currently, to make complex ducting solutions, wrought or cast 6061 aluminium welded hog out with welded flanges is the main manufacturing technique. Hog out is the use of CNC machining to gradually remove material to shape the part to final dimensions. While Al 6061 offers good properties for a duct, particularly a duct used in an aerospace application, it cannot be welded to itself due to problems with solidification cracking. As a result a weld filler material has to be used. Commonly used filler materials are Al 4043 and Al 4047 which contain a higher percentage of silicon (4.5-6 wt%). However, such filler materials compromise the beneficial mechanical, corrosion and fatigue properties that could otherwise be achieved with Al 6061, so joints are avoided as far as possible.

The proposed method according to claim 1 is able to make a component, such as a duct for an aerospace application, from a material like Al 6061. The method utilises building a preform, for example, one which has near-net dimensional form of a duct, and then using that preform as a mandrel for a cold spray powder deposition process. The preform comprises some residual porosity which acts as a key for the cold spray powder deposition process. The coating applied by the cold spray powder deposition process is able to provide a gas-tight layer on one or both surfaces of the preform. The preform, with its residual porosity, acts as a porous mandrel for the cold spray powder deposition process. A HIP or other consolidation process can be applied to reduce residual porosity within the material of the coated preform and raise its structural properties.

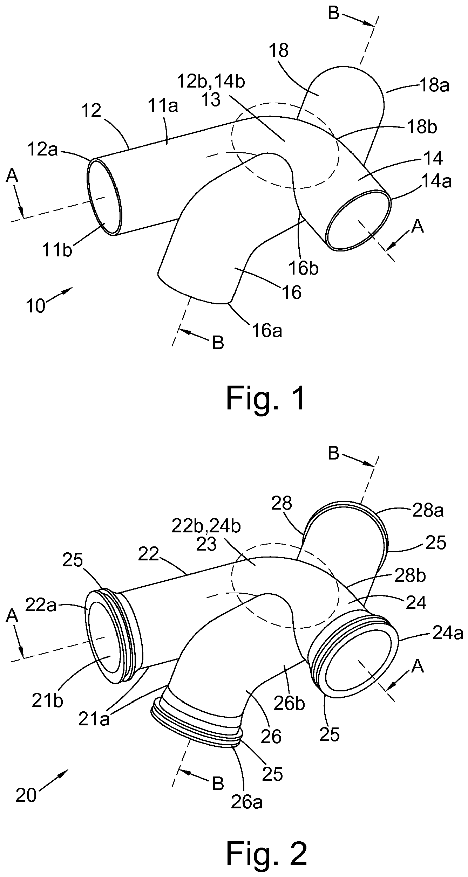

Fig. 1 shows a perspective view of a preform 10 which has been built by a sintering process. The preform 10 may be in the form of a duct or duct system, as shown, in particular comprising a centrepiece or junction for a number of ducts of a ducting system. The preform 10 may have a complex form, e.g., providing a junction for a set of duct passages which are of non-regular geometry.

In the embodiment of Fig. 1, the preform 10 comprises sections of duct 12, 14, 16, 18 which meet in the centre of the preform 10. In the example, there are four duct sections 12, 14, 16, 18, arranged approximately in the form of a cross, with duct section 12 arranged opposite duct section 14 to define a first duct path A-A, and duct section 16 arranged opposite duct section 18 to define a second duct path B-B at substantially 90 degrees to the first duct path A-A where they cross but following paths which change direction significantly a short distance away from the junction.

The duct sections 12, 14, 16, 18 may each comprise a section of duct having a complex three-dimensional form, e.g., as shown. This complex form might be to navigate around obstacles such as existing componentry, or to improve certain properties of the duct, e.g. weight, operational efficiency, reduction in pressure drop, noise reduction, etc.. The lengths of the duct sections 12, 14, 16, 18 may be different, as necessary, to join to other components.

Of course, the preform 10 is not limited to the shape shown and may comprise fewer or more duct sections 12, 14, 16, 18 than illustrated, a different junction arrangement, or may be for a different functional part of the ducting system, etc., as necessary for its intended purpose. For example, it may comprise just two duct sections, three duct sections, five duct sections, six duct sections, seven duct sections, eight duct sections, as desired.

In the figure, each duct section 12, 14, 16, 18 comprises a pipe or tube with a first end 12a, 14a, 16a, 18a. Each first end 12a, 14a, 16a, 18a is intended to be joined to another component, another section of ducting, a cap-piece to close it off or it may be left open or include a grille, etc.. The first end 12a, 14a, 16a, 18a may comprise a circular opening as shown or it may comprise an oval shaped opening, a stadium shaped opening or more complex shaped opening, as desired. There may be a mixture of duct shapes and sizes.

Each duct section 12, 14, 16, 18 also comprises a second end 12b, 14b, 16b, 18b which blends with and forms a junction with one or more of the other second ends 12b, 14b, 16b, 18b in a central intersection area 13. Additional internal structure may be included (not shown) in the form of baffles, partitions or flow directors, either within the region of the junction or further along the duct sections 12, 14, 16, 18.

The preform 10 comprises a level of porosity of at least 10%. The porosity provides a porous outer surface 11a and a porous inner surface 11b which can serve as a key for a cold spray powder deposition process.

Fig. 2, shows a perspective view of the component 20 which has been made from the preform 10, following the cold spray powder deposition process and subsequent consolidation process (both to be explained in more detail below).

The component 20 is a finished duct system, in particular for an aerospace application, comprising a centrepiece (the central intersection area 23) and extended pipes or tubes. Duct sections 22, 24, 26, 28 of the component correspond to duct sections 12, 14, 16, 18 of the preform 10. The preform 10 has been transformed into component 20 through cold spraying with a powdered second material to form a coated preform having a gas-tight surface or surfaces. The coating applied by the cold spray powder deposition process may be on an inner surface, to an outer surface or on both. The coated preform 20 has then been subjected to a HIP or other consolidation process.

The first end 22a, 24a, 26a, 28a of one or more duct sections 22, 24, 26, 28 of the component 20 are provided with a flange 25 for connection to another component (not shown). The flange 25 is built up during the cold spray process into any appropriate form.

As with the preform 10, the second ends 22b, 24b, 26b, 28b of the one or more duct sections 22, 24, 26, 28 blend with and form a junction with the one or more of the other second ends 22b, 24b, 26b, 28b in a central intersection area 13 of the component.

### Forming the Preform

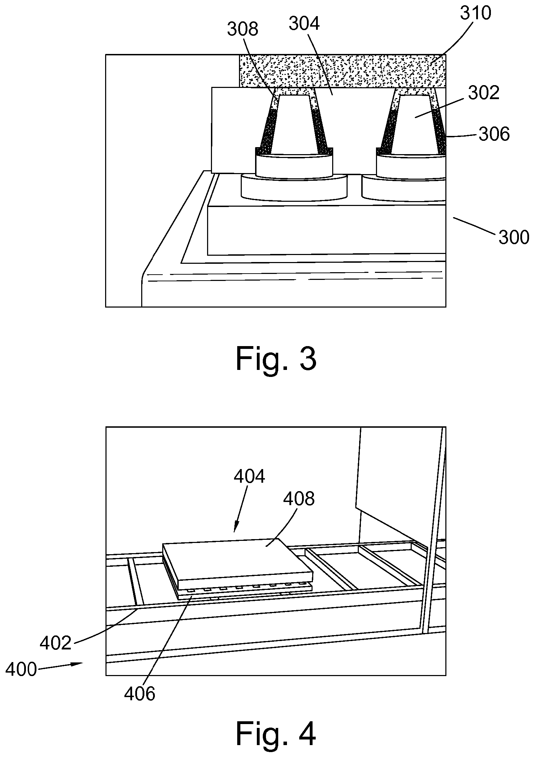

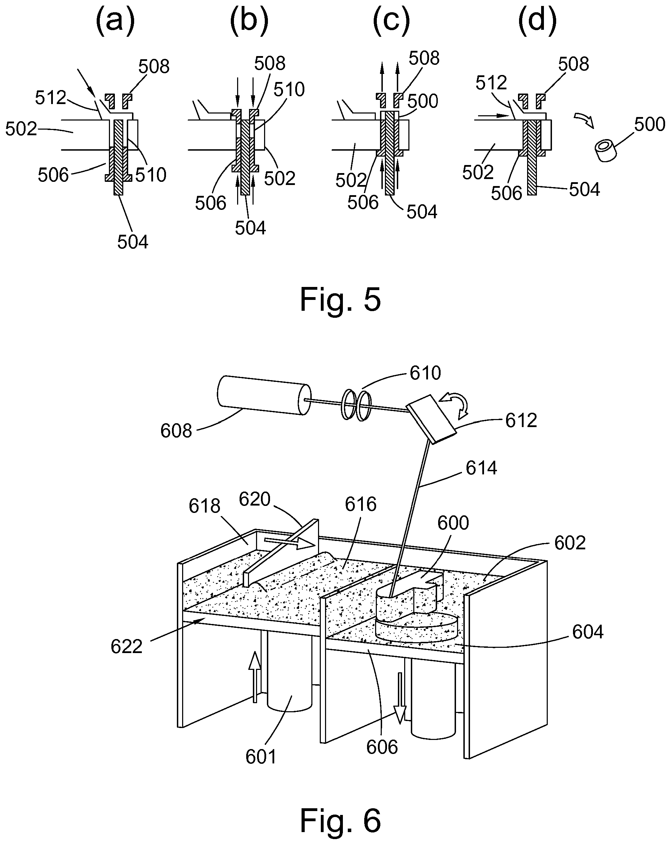

The preform 10 may be formed by any suitable technique in which a sintered body with residual porosity, having substantially net form, can be produced from a powdered material. Figs. 3-5 provide examples of powder metallurgical routes and Fig. 6 shows an example of an additive manufacturing process, in particular a Direct Energy Deposition (DED) Additive Manufacturing technique in the form of a laser bed fabrication process.

In Fig. 3, a mould 300 for a gravity sintering process is shown in cross-section to illustrate an example of how a male mould portion 302 and a female mould portion 304 might be assembled together and filled with a powdered material 306.

In the illustration, the mould 300 is arranged to form two or more conical filters, but this is merely exemplary to show the gravity sintering process. Other types of components are envisaged herein, in particular components for complex ducting systems.

In the example of Fig. 3, the powdered material 306 is fed from above into the assembled male and female mould portions 302, 304 to fill the die cavity 308 defined between them. The mould 300 may be vibrated to increase the packing of the powdered material 306. The mould portions, instead of being a male mould portion 302 and a female mould portion 304 could comprise two generally concave mould portions which define opposite sides of a component. There may additionally be one or more cores suspended within the female concave mould portions 304 to define a cavity or cavities within the preform 10, for example, in the production of a tubular product. The mould portions 302, 304 are pushed together to form a mould cavity 308, the mould cavity 308 having a shape of near-net dimensions corresponding to the shape of the intended "as built" sintered body.

In the example of Fig. 3, the component is a bronze filter. A gravity sintering process is not limited to such materials and many other materials could be employed and are envisaged for building the preform 10. For example, high strength alloys can be sintered by this process, such as non-weldable metallic powders, e.g., Al 6061, Al 7075 and other lightweight alloys that are prone to solidification cracking during a fusion process but yet might be useful for making ducting components.

The particles 310 of the powdered material 306 can be consolidated initially prior to sintering in a number of ways, for example, through vibration such as from a vibrating plate, or through a compaction process such as when powdered material is compressed between two or more dies. This can assist with raising the initial density prior to sintering in a mould arrangement 300 and help to remove potential defects in the packing of the powder that might form cracks in the final component.

Fig. 4 shows an example of a furnace 400, having a conveyor 402. A mould 404 comprising a lower die 406 and an upper die 408 which define a moulding cavity filled with powdered material (not visible in the figure) is transported through the furnace 400 on the conveyor 402 and heated. The heat causes the particles of powdered material to sinter together, forming necks of material linking the particles together to form a three dimensional sintered body.

The desired density of the sintered preform might be greater than 50% of theoretical density for the material (the theoretical density, i.e., 100%, being where no residual density remains in the material). For example, the initial density might be in the region of 55-90% of the theoretical density, or even 60-80% of theoretical density. Stated another way, the preform 10 may have residual porosity levels of up to 50%, optionally between 10-45%, or even 20-40%. At such density levels, the preform has sufficient strength to allow handling and coating in a subsequent cold spray powder deposition process.

Fig. 5 shows a simple compaction process for producing a tubular preform 500. In the example, the tooling comprises a die 502 defining an annular cavity about a core 504, as well as a lower punch 506 and an upper punch 508, that together define a die cavity 510 for forming a cylindrical part.

In an initial step (a), powder is fed into the top of the die cavity 510 via a feed shoe 512. For this step, the lower punch 506 is in a lowered position and the upper punch 508 is removed from the die 502 to provide access for the powder feed. The upper punch 508 is then pushed towards the lower punch 506 to consolidate the powder therebetween in step (b). The lower punch 506 may continue its upward movement in step (c) to eject the upper punch 508 and the consolidated preform 500. In a final stage (d) the preform 500 is removed from the die tooling, e.g., through re-positioning of the feed shoe 512. During the consolidation, heat may be applied to the die cavity to sinter the powder particles of the preform 500 together. Alternatively, the consolidated part may be placed in a furnace to sinter the powdered material particles together.

In practice the die tooling may be more complex. It may comprise, for example, more than two punches to achieve target density levels within the preform 10 where the thickness of the preform varies. In addition other steps, such as forming operations, may be added to produce preforms having much more complex shapes.

Fig. 6 shows an apparatus 601 for a laser bed fabrication process. The apparatus 601 comprises a first powder bed 602 located in a first tank 604 which is provided with an adjustable platform 606 for a base. The adjustable platform 606 is used to gradually move the preform 10 downwards as it is built up as a series of sintered layers. A laser apparatus 608, with lenses 610 and an adjustable X-Y scanning mirror 612 is provided to direct a laser beam 614 into the first powder bed 602 and at the top of the sintered preform 600 which is being built. The laser beam 614 is used to sinter the powder particles in the upper part of the powder bed 602 into a particular shaped layer. Once a layer has been built, fresh powder from a second powder bed 616 contained in a neighbouring second tank 618, is swept across the top of the sintered preform 600 by a re-coater arm 620, ready for the laser beam 614 to sinter the next layer in situ. The second powder bed 616 is provided with an adjustable platform 622 in the base of the second tank 618 to gradually raise the level of the powder in the second powder bed 616 as the powdered material is swept across to the first powder bed 602 by the re-coater arm 620 for sintering by the laser beam 614 to the top of the preform 600. Once the complete sintered preform 600 has been built up from a plurality of layers, the preform 600 can be removed from the first tank 604.

In one embodiment, the preform 10 is manufactured by a free sintering technique such as gravity sintering, for example, similar to the process described with reference to Figs. 3 and 4. Reusable moulds are filled with Al 6061 powder and then sintered at 550-650°C (1022-1202°F) for 1-4 hours in high purity nitrogen. The re-usable moulds may comprise graphite or ceramics. This process has been found to produce preforms 10 with a density in the range of 60 to 80% of theoretical density. Such a density enables the preform 10 to be handled easily in a subsequent cold-spray powder deposition process. It also gives a surface finish which provides an effective key for the soften powder particles of the cold-spray deposition process to mechanically lock onto the surface of the preform 10.

### Cold Spray Powder Deposition Process

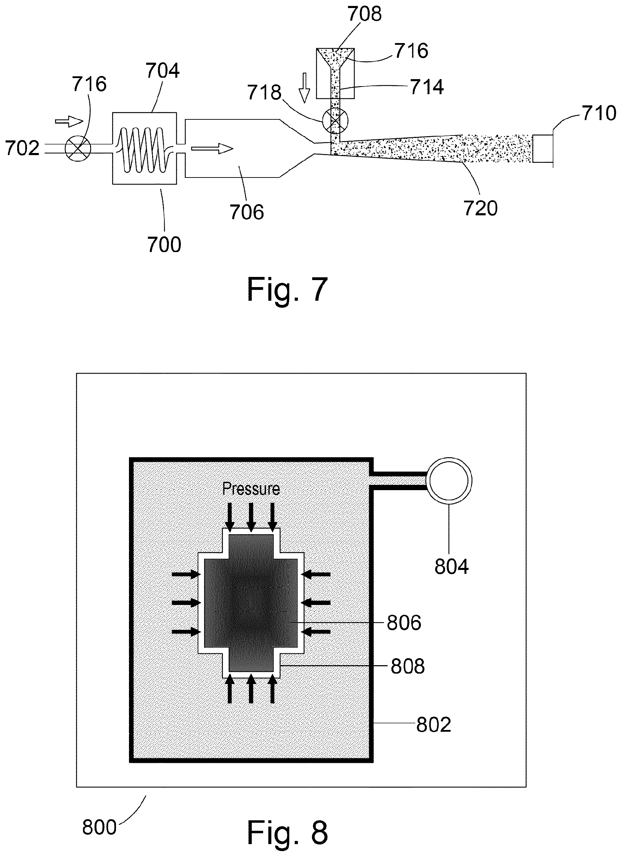

Fig. 7 shows a schematic example of a cold spray powder deposition apparatus 700. The apparatus 700 comprises a gas supply 702 and a heater matrix 704 to generate the heated carrier gas 706 which is used to transport powdered material 708 towards a substrate 710. The heater matrix 704 provides sufficient heat to the carrier gas 706 to partially melt the powdered material 708 during its path towards the substrate 710. The gas supply 702 may be an inert gas such as nitrogen. The powdered material 708 may be stored in a hopper 712 of a feed supply 714. The flow of the carrier gas 706 from the gas supply 702 can be controlled by a valve 716. In this way, the speed and temperature of the carrier gas 706 can be regulated. In addition, the quantity of powdered material 708, i.e., number of particles per unit time, flowing into the carrier gas 706 can be controlled by a valve 718 as the powder drops from the hopper 712 into the flow of carrier gas 706.

Through controlling the operational parameters of the apparatus 700, the extent of the softening of the particles can be regulated so that the shape of the "splats", which form when the softened particles impact the substrate 710, can be controlled. The softened material forming the "splats" will tend to lock mechanically with any cavities and surface porosity available in the surface of the preform 10 as the particles plastically deform on impact.

A cold spray powder deposition apparatus 700 can be used to build up a relatively thick layer of material, as necessary, through targeting the powdered material at a particular area of the preform 10 by directing a nozzle and/or by using appropriate masking to shield an area while material is being deposited to build up an unmasked area.

In the example of Fig. 2 the cold spray powder deposition process is used to coat the outer surface of the preform 10, for example to provide a coating with a predetermined thickness (indicated by 21a on the outer surface of the preform 10). The cold-spray powder deposition process is also used to build up a flange 25 of the coating material at some or each of the openings (first ends 22a, 24a, 26a, 28a) of the duct sections 22, 24, 26, 28. The process may be used to apply a cold spray powder deposition coating to an internal surface of the duct preform 10 too (indicated by 21b on the inner surface of the preform).

A robotic arm (not shown) may be used to apply the coating by the cold spray powder deposition process. For reasons of access, this may limit the internal dimensions of the preform 10 where an internal coating is applied. For example, the preform 10 may have an internal diameter of greater than 50mm to allow the robotic arm to manoeuvre within the preform 10, and possibly greater than 60mm. Modifications may be possible to the nozzle to coat finer duct sections.

The "splats" of the cold spray powder deposition process, together, build up a gas-tight layer on the surface of the preform 10. This gas-tight layer can be the same material as the preform 10, or can be a different material which has been selected for certain properties.

Where the cold spray powder deposition process has been used to coat both the internal surface and external surface 21a, 21b of the preform 10, the coated preform 10 is provided with a sandwich structure, with the porous material of the preform 10 in the middle providing a core which is coated on both sides by the gas-tight layers of the cold spray powder deposition material 21a, 21b.

### Consolidation

Fig. 8 illustrates an apparatus 800 for a simple hot isostatic pressing (HIP) process. In the example, a heated chamber 802 is provided which is pressurised by a gas supply 804, for example, argon. The part 806 to be subjected to the HIP is placed inside the chamber 802, usually within a container 808, for example, a steel can. Large pressures are applied to the part by increasing the pressure within the chamber 802 while simultaneously applying heat. This causes the part 808 to consolidate, allowing densities to reach close to 100% of theoretical densities when appropriate heat and pressures are applied for a sufficient length of time.

### Example of the Method

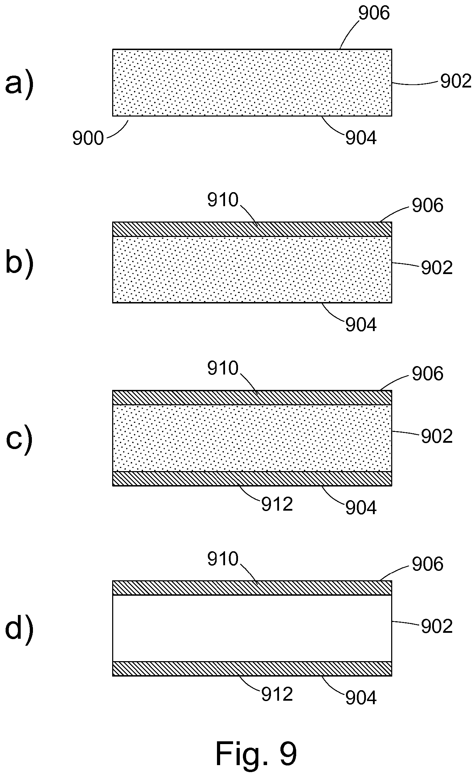

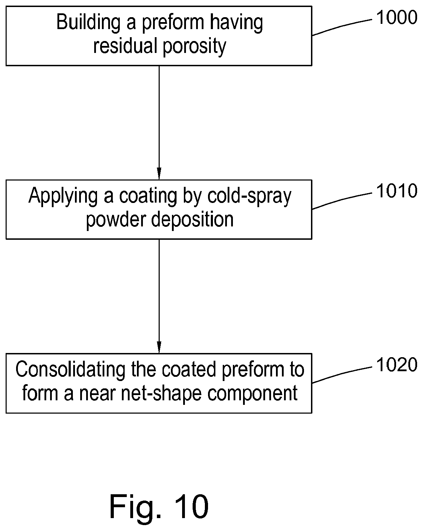

Figs. 9 and 10 provide an illustration of the complete process.

In Figs. 9a-d, a preform 900 is built from a powdered first material 902. In the illustration, the rectangle of powder 902 represents a cross-section through a wall of a preform 900. The preform 900 has an inner surface 904 and an outer surface 906. Overall, the preform 900 may have a three-dimensional form corresponding to a duct or duct system, or a component for use in a complex ducting system. The preform 900 may comprise a duct system 20 with a centrepiece and a plurality of duct sections as illustrated in Fig. 2.

During the building, the preform 900 is sintered to have a level of residual porosity, which might be in the region of 20-40%, giving the preform 10 a density in the range of 60-80% of theoretical density.

The preform 900 may be built by any of the preform building processes described above.

For example, the preform can be manufactured by a free sintering technique. Reusable moulds, for example, filled with Al 6061 powder (or other suitable alloy powder), can be sintered at the material's sintering temperature for a suitable sintering time to produce a preform 10 which has reached a density ranging from 50-90%, optionally 60 to 80%, of theoretical density (theoretical density being 100% density, i.e., with no residual porosity). In the case of Al 6061 the sintering can be performed at 550-650°C (1022-1202°F) for 1-4 hours in high purity nitrogen. For high temperature duct applications, Ni-based superalloys can be utilized. For example Inconel 625 powder can be gravity sintered at 1000 to 1300 °C for 1-4 hours in high purity Argon or 13 mPa (10⁻⁴ Torr) vacuum to reach sintered density of 60 to 90% of theoretical density.

This level of density in the preform 10 is able to provide sufficient strength to withstand a cold spray powder deposition process without cracking and significant distortion. Indeed, with appropriate geometry, the preform 10 can be used as a porous mandrel within the cold spray powder deposition process.

The step of building a preform having a residual porosity is step 1000 in the flowchart of Fig. 10.

Next a coating 910 is applied to the outer surface 906 through a cold spray powder deposition process as described above. A coating 912 may then be applied to the inner surface 904 through a cold spray powder deposition process. The internal space may be larger than 50mm, optionally larger than 75mm, to enable a powder deposition gun attached to a robotic arm to move within the preform 10.

Alternatively, the order of the application of the inner and outer surface coatings may be reversed.

Applying a coating to the preform by a cold spray powder deposition process is step 1010 in the flowchart of Fig. 10. This step may be repeated as appropriate to coat the inner and outer surfaces of the preform 10 and to build up the surfaces as required, e.g., to form the flanges 25 of the component.

An entire duct structure for an aerospace application can be manufactured using this approach. Alternatively (but not exclusively) a duct system 20 comprising a centrepiece can be made for connection to existing duct components.

After producing a duct system the remaining tubes with a wall thickness of, say, 0.065-0.080 inches (1.65-2.03 mm), as well as flanges 25, can be built on the component using a CNC multi-axial platform and cold spray powder deposition.

The coated preform 10 is then consolidated by a HIP process. By applying a gas-tight layer on both the inner and outer surfaces by a cold spray powder deposition process, it is possible to create a gas-tight capsule which is particularly suitable for HIP'ing. The coated preform 10 can be HIP'ed to produce a fully dense core and a final component 914 of near-net shape (or possibly even net shape) requiring little or no machining to final form. The component 914 has a density of greater than 98% of theoretical density for the first material, optionally greater than 99% of theoretical density. The HIP can remove defects, such as cracks, from within the preform 10 in addition to porosity.

The step of consolidating the coated preform to form a near net shape component is step 1020 of the flowchart in Fig. 10.

The method may be used advantageously to form a tubular component 914. The porous preform 10 for such a component 20, 914, due to its configuration, can be used as a porous mandrel for the subsequent cold spray powder deposition process. The preform 10 can be made of various materials including non-weldable alloys. In addition, there is synergy through combining the two processes as the porous structure of the mandrel, as provided by the preform 10, offers better adhesion of the cold sprayed deposited powder than a solid substrate.

The proposed method enables manufacturing of complex net or near net shape components, such as ducts, made of non-weldable alloys, and having minimum machining allowances. Moreover it enables a choice of materials for the core or the coatings that was not previously available - the choice can be based on functional properties, such as, weldability thermal insulation, corrosion properties, strength, fatigue resistance etc., rather than necessitated by the assembly. It also allows the weight of the component to be reduced through optimisation of the configuration and dimensions.

Thus at least in the illustrated embodiments, the present process has been shown to offer components for aeronautical applications which benefit from cost reduction and/or an improved buy-to-fly ratio ("buy-to-fly ratio" is often used to describe the weight ratio between the raw material used for a component and the weight of the component itself) and/or cycle time. In many instances it can eliminate multiple operations, such as hog out, welding, tube bending, etc..

The method can offer improved material properties. As mentioned, the first and second materials can each be selected for particular functionality, weldability, fatigue or corrosion resistance, conductivity, etc., optimising the overall performance of the component. Different materials can be used to manufacture the preform and to spray an external/internal surface, e.g., duct surface. For example, cold sprayed powder material can be selected for heat dissipation and thermal insulation, which is beneficial for air conditioning ducts with cold air flow. Gravity sintering, cold spray powder deposition and HIP are solid state diffusion process resulting in forged material properties while maintaining particularly homogenous microstructures.

In many ways the proposed method can be seen as a method of building a near net shape porous core for a component which is then used as a porous mandrel for cold spray powder deposition layers and the coated core subsequently consolidated, e.g., with a HIP, to form a fully dense component having minimum machining allowances.

The proposed method, viewed in another way, can also be seen as a method of reducing machining required to achieve net shape in a duct or duct component, the method comprising building a near net shape porous core for a duct or duct component, then using the porous core as a porous mandrel in a cold spray powder deposition process and subsequently consolidating the coated core by a HIP process to form a component with a density of greater than 97% of theoretical density. All the optional features described above apply equally to this method.

## Claims

1. A method of manufacturing a component (20; 914) comprising:
building (1000) a preform (10; 600; 900) from a powdered first material (902), the preform having residual porosity;
applying (1010) a coating (21a, 21b; 910, 912) of a second material to a porous surface (11a, 11b; 904, 906) of the preform by a cold spray powder deposition process to form a coated preform having a gas-tight surface; and
consolidating (1020) the coated preform to produce a component;
**characterised in that** the applying a coating comprises building one or more flanges (25) of the second material by cold spray powder deposition, each flange encircling an end (12a, 12b, 14a, 14b, 16a, 16b 18a, 18b) of a tubular section of the component.

2. A method as claimed in claim 1, wherein the preform is used as a mandrel in the cold spray powder deposition process.

3. A method as claimed in claim 1 or 2, wherein the preform is built with a density in a range of 50 to 90% of a theoretical density the first material, optionally 60-80% of a theoretical density of the first material.

4. A method as claimed in any preceding claim, wherein the preform is built using an additive manufacturing and/or powder metallurgy process.

5. A method as claimed in any preceding claim, wherein the preform is built using a gravity sintering technique, optionally wherein the preform is built by sintering in an inert atmosphere.

6. A method as claimed in claim 5, wherein the preform is built by sintering the powdered first material in a reusable mould, optionally wherein the first material is an aluminium alloy, further optionally an Al 6061 alloy.

7. A method as claimed in claim 6, wherein the preform is sintered at between 550-650°C (1022-1202°F), optionally for between 30 mins to 6 hours, further optionally in high purity nitrogen.

8. A method as claimed in any preceding claim, wherein the second material is a different composition to the first material, optionally wherein the second material includes additions of elements to promote welding of the component to another component.

9. A method as claimed in any preceding claim, wherein the coating of the second material is applied to an inner (11b; 904) and/or an outer surface (11a; 906) of the preform, optionally wherein the coating of the second material is applied by a robotic arm.

10. A method as claimed in any preceding claim, wherein the coated preform is consolidated by a Hot Isostatic Pressing (HIP) process.

11. A method as claimed in any preceding claim, wherein the method is a method of making a duct (12, 14, 16, 18) or duct system (20) for an aerospace application, optionally comprising a centrepiece (23).

12. A component (20; 914) comprising a core (10; 600; 900) of a sintered first material powder (902) having a density of greater than 98% of theoretical density and one or more coatings (21a, 21b; 910, 912) of a second material that comprises a cold spray powdered deposition layer or layers applied to an inner surface (11b; 904) and/or outer surface (11a; 906) of the component;
**characterised in that** the one or more coatings comprise flanges (25), each flange encircling an end (12a, 12b, 14a, 14b, 16a, 16b 18a, 18b) of a tubular section of the component.

13. A component as claimed in claim 12, wherein the first material is an aluminium alloy, optionally Al 6061, and/or wherein the second material is a weldable or non-weldable material.

14. A component as claimed in claim 12 or 13, wherein the component is a tubular component (914), a multi-tubular component, a duct (12, 14, 16, 18), a duct system (2), a centrepiece (23) or other component for a duct or ducting system, optionally for an aerospace application.

## Patentansprüche

1. Verfahren zur Herstellung einer Komponente (20; 914), umfassend:
Bauen (1000) eines Vorformlings (10; 600; 900) aus einem pulverförmigen ersten Material (902), wobei der Vorformling eine Restporosität aufweist;
Aufbringen (1010) einer Beschichtung (21a, 21b; 910, 912) eines zweiten Materials auf eine poröse Oberfläche (11a, 11b; 904, 906) des Vorformlings durch ein Kaltsprühpulverabscheidungsverfahren, um einen beschichteten Vorformling mit einer gasdichten Oberfläche auszubilden; und
Festigen (1020) des beschichteten Vorformlings, um eine Komponente herzustellen;
**dadurch gekennzeichnet, dass** das Aufbringen einer Beschichtung das Bauen eines oder mehrerer Flansche (25) des zweiten Materials durch Kaltsprühpulverabscheidung umfasst, wobei jeder Flansch ein Ende (12a, 12b, 14a, 14b, 16a, 16b 18a, 18b) eines röhrenförmigen Abschnitts der Komponente umgibt.

2. Verfahren nach Anspruch 1, wobei der Vorformling als ein Dorn in dem Kaltsprühpulverabscheidungsverfahren verwendet wird.

3. Verfahren nach Anspruch 1 oder 2, wobei der Vorformling mit einer Dichte in einem Bereich von 50 bis 90 % einer theoretischen Dichte dem ersten Material, optional 60-80 % einer theoretischen Dichte des ersten Materials, gebaut ist.

4. Verfahren nach einem der vorhergehenden Ansprüche, wobei der Vorformling unter Verwendung eines Additivherstellungs- und/oder Pulvermetallurgieverfahrens gebaut ist.

5. Verfahren nach einem der vorhergehenden Ansprüche, wobei der Vorformling unter Verwendung einer Schwerkraft-Sintertechnik gebaut ist, wobei der Vorformling optional durch Sintern in einer inerten Atmosphäre gebaut ist.

6. Verfahren nach Anspruch 5, wobei der Vorformling durch Sintern des pulverförmigen ersten Materials in einer wiederverwendbaren Form gebaut ist, wobei das erste Material optional eine Aluminiumlegierung, ferner optional eine AI 6061-Legierung, ist.

7. Verfahren nach Anspruch 6, wobei der Vorformling bei zwischen 550-650 °C (1022-1202 °F), optional zwischen 30 Minuten und 6 Stunden lang, ferner optional in hochreinem Stickstoff, gesintert ist.

8. Verfahren nach einem der vorhergehenden Ansprüche, wobei das zweite Material eine andere Zusammensetzung als das erste Material ist, wobei das zweite Material optional Ergänzungen von Elementen beinhaltet, um das Schweißen der Komponente an eine andere Komponente zu unterstützen.

9. Verfahren nach einem der vorhergehenden Ansprüche, wobei die Beschichtung des zweiten Materials auf eine innere (11b; 904) und/oder eine äußere Oberfläche (11a; 906) des Vorformlings aufgebracht wird, wobei die Beschichtung des zweiten Materials durch einen Roboterarm aufgebracht wird.

10. Verfahren nach einem der vorhergehenden Ansprüche, wobei der beschichtete Vorformling durch ein Verfahren zum isostatischen Heißpressen (HIP) gefestigt wird.

11. Verfahren nach einem der vorhergehenden Ansprüche, wobei das Verfahren ein Verfahren zur Fertigung eines Rohrs (12, 14, 16, 18) oder eines Rohrsystems (20) für eine Anwendung im Luft- und Raumfahrtbereich ist, die/das optional ein Kernstück (23) umfasst.

12. Komponente (20; 914), umfassend einen Kern (10; 600; 900) eines Pulvers (902) aus dem gesinterten ersten Material mit einer Dichte von mehr als 98 % der theoretischen Dichte und eine oder mehrere Beschichtungen (21a, 21b; 910, 912) eines zweiten Materials, das eine kaltsprühpulverförmige Abscheidungsschicht oder -schichten umfasst, die auf eine innere Oberfläche (11b; 904) und/oder eine äußere Oberfläche (11a; 906) der Komponente aufgebracht sind;
**dadurch gekennzeichnet, dass** die eine oder mehreren Beschichtungen Flansche (25) umfassen, wobei jeder Flansch ein Ende (12a, 12b, 14a, 14b, 16a, 16b 18a, 18b) des röhrenförmigen Abschnitts der Komponente umgibt.

13. Komponente nach Anspruch 12, wobei das erste Material eine Aluminiumlegierung, optional AI 6061, ist und/oder wobei das zweite Material ein schweißbares oder nicht-schweißbares Material ist.

14. Komponente nach Anspruch 12 oder 13, wobei die Komponente eine röhrenförmige Komponente (914), eine mehrfach röhrenförmige Komponente, ein Rohr (12, 14, 16, 18), ein Rohrsystem (2), ein Kernstück (23) oder eine andere Komponente für ein Rohr oder Rohrsystem, optional für eine Anwendung im Luft- und Raumfahrtbereich, ist.

## Revendications

1. Procédé de fabrication d'un composant (20 ; 914), comprenant :
la construction (1000) d'une préforme (10 ; 600 ; 900) à partir d'un premier matériau sous forme de poudre (902), la préforme ayant une porosité résiduelle ;
l'application (1010) d'un revêtement (21a, 21b ; 910, 912) d'un second matériau sur une surface poreuse (11a, 11b ; 904, 906) de la préforme au moyen d'un processus de dépôt de poudre par pulvérisation à froid pour former une préforme revêtue ayant une surface étanche aux gaz ; et
la consolidation (1020) de la préforme revêtue pour produire un composant ;
**caractérisé en ce que** l'application d'un revêtement comprend la construction d'une ou plusieurs brides (25) du second matériau au moyen d'un dépôt de poudre par pulvérisation à froid, chaque bride encerclant une extrémité (12a, 12b, 14a, 14b, 16a, 16b 18a, 18b) d'une section tubulaire du composant.

2. Procédé selon la revendication 1, dans lequel la préforme est utilisée comme un mandrin dans le processus de dépôt de poudre par pulvérisation à froid.

3. Procédé selon la revendication 1 ou 2, dans lequel la préforme est construite avec une densité dans une plage comprise entre 50 et 90 % d'une densité théorique du premier matériau, éventuellement entre 60 et 80 % d'une densité théorique du premier matériau.

4. Procédé selon une quelconque revendication précédente, dans lequel la préforme est construite à l'aide d'un processus de fabrication additive et/ou de métallurgie des poudres.

5. Procédé selon une quelconque revendication précédente, dans lequel la préforme est construite à l'aide d'une technique de frittage par gravité, éventuellement dans lequel la préforme est contrainte par frittage dans une atmosphère inerte.

6. Procédé selon la revendication 5, dans lequel la préforme est construite par frittage du premier matériau sous forme de poudre dans un moule réutilisable, éventuellement dans lequel le premier matériau est un alliage d'aluminium, en outre éventuellement un alliage Al 6061.

7. Procédé selon la revendication 6, dans lequel la préforme est frittée entre 550 et 650 °C (entre 1022 et 1202 °F), éventuellement pendant 30 minutes à 6 heures, en outre éventuellement dans de l'azote de haute pureté.

8. Procédé selon une quelconque revendication précédente, dans lequel le second matériau présente une composition différente de celle du premier matériau, éventuellement dans lequel le second matériau comporte des ajouts d'éléments pour favoriser le soudage du composant à un autre composant.

9. Procédé selon une quelconque revendication précédente, dans lequel le revêtement du second matériau est appliqué sur une surface interne (11b ; 904) et/ou une surface externe (11a ; 906) de la préforme, éventuellement dans lequel le revêtement du second matériau est appliqué par un bras robotisé.

10. Procédé selon une quelconque revendication précédente, dans lequel la préforme revêtue est consolidée par un processus de compression isostatique à chaud (CIC).

11. Procédé selon une quelconque revendication précédente, dans lequel le procédé est un procédé de réalisation d'un conduit (12, 14, 16, 18) ou d'un système de conduits (20) pour une application aérospatiale, comprenant éventuellement une pièce centrale (23).

12. Composant (20 ; 914) comprenant un noyau (10 ; 600 ; 900) d'une poudre frittée de premier matériau (902) ayant une densité supérieure à 98 % de la densité théorique et un ou plusieurs revêtements (21a, 21b ; 910, 912) d'un second matériau qui comprend une couche ou des couches de dépôt sous forme de poudre par pulvérisation à froid appliquée(s) sur une surface interne (11b ; 904) et/ou une surface externe (11a ; 906) du composant ;
**caractérisé en ce que** les un ou plusieurs revêtements comprennent des brides (25), chaque bride encerclant une extrémité (12a, 12b, 14a, 14b, 16a, 16b 18a, 18b) d'une section tubulaire du composant.

13. Composant selon la revendication 12, dans lequel le premier matériau est un alliage d'aluminium, éventuellement Al 6061, et/ou dans lequel le second matériau est un matériau soudable ou non soudable.

14. Composant selon la revendication 12 ou 13, dans lequel le composant est un composant tubulaire (914), un composant multitubulaire, un conduit (12, 14, 16, 18), un système de conduits (2), une pièce centrale (23) ou un autre composant pour un conduit ou un système de conduits, éventuellement pour une application aérospatiale.
